# EUROPEAN PATENT APPLICATION

(11) **EP 4 164 345 A1**
(43) Date of publication of application: **12.04.2023**
(21) Application number: 21822551.4
(22) Date of filing: 09.06.2021
(51) Int. Cl.: H05K 5/00

(54) **REAR COVER ASSEMBLY, TERMINAL DEVICE AND METHOD FOR MANUFACTURING REAR COVER ASSEMBLY**

(30) Priority: 09.06.2020 CN 202010519408
(71) Applicant: ZTE Corporation, Shenzhen, Guangdong 518057 (CN)
(72) Inventor: TANG, Changquan, Shenzhen, Guangdong 518057 (CN)
(74) Representative: Canzler & Bergmeier Patentanwälte Partnerschaft mbB
(86) International application number: PCT/CN2021/099088
(87) International publication number: WO 2021/249424

(57) **Abstract**

The present disclosure provides a rear cover assembly applied to a terminal device. The rear cover assembly comprises a rear cover body, an antenna layer and a film coating layer which are sequentially arranged from inside to outside in the thickness direction of the rear cover assembly, and the rear cover assembly further comprises a conductive connection member, wherein a first end of the connection member is electrically connected to the antenna layer, and a second end of the connection member penetrates the rear cover body and is located in a space defined by the rear cover body. The present disclosure further provides a terminal device and a method for manufacturing the rear cover assembly.

## Description

### TECHNICAL FIELD

The present disclosure relates to, but is not limited to, the field of communication devices, and particularly relates to the field of terminal devices.

### BACKGROUND

With the technical development of terminal devices, especially mobile terminal devices such as mobile phones, the matched technologies are also subjected to rapid iteration. As higher data exchange requirements are made on terminal devices by 5G communication, requirements on various aspects of performance (such as size, frequency band number and the like) of antennas in the terminal devices are also further increased.

However, under the requirements of a lightweight terminal device and a multi-order curved surface shape of the terminal device, space inside the terminal device available for manufacturing the antenna becomes smaller and smaller, and the existing antenna technology has encountered a bottleneck.

### SUMMARY

The present disclosure provides a rear cover assembly, a terminal device, and a method for manufacturing the rear cover assembly.

According to a first aspect, an embodiment of the present disclosure provides a rear cover assembly applied to a terminal device. The rear cover assembly includes a rear cover body, an antenna layer and the cover film layer sequentially disposed from inside to outside in a thickness direction of the rear cover assembly, and the rear cover assembly further includes a conductive connection member having a first end electrically connected to the antenna layer, and a second end passing through the rear cover body and located in a space defined by the rear cover body.

According to a second aspect, an embodiment of the present disclosure further provides a terminal device, including a device body and the rear cover assembly according to the first aspect. The device body includes a main board, the rear cover body is fixedly connected to the device body, the main board is located in a space defined by the rear cover body, and the second end of the connection member is electrically connected to the main board.

According to a third aspect, an embodiment of the present disclosure further provides a method for manufacturing a rear cover assembly, including: forming a cover film layer; forming an antenna layer on one side of the cover film layer; and forming a combined structure of a rear cover body and a connection member on a side of the antenna layer facing away from the cover film layer, where the rear cover body is attached to the antenna layer and provided with the connection member having a first end electrically connected to the antenna layer, and a second end passing through the rear cover body.

### BRIEF DESCRIPTION OF DRAWINGS

FIG. 1 is a schematic structural view of a rear cover assembly according to an embodiment of the present disclosure;
FIG. 2 is an enlarged partial view of the rear cover assembly in FIG. 1;
FIG. 3 is a schematic diagram illustrating an alignment relationship between a rear cover assembly of a terminal device and a device body according to an embodiment of the present disclosure;
FIG. 4 is an enlarged partial view of FIG. 3;
FIG. 5 is a schematic structural view of a terminal device according to an embodiment of the present disclosure;
FIG. 6 is an enlarged partial view of FIG. 5;
FIG. 7 is a schematic diagram illustrating relative positions of respective sub-film layers of the cover film layer in the rear cover assembly according to an embodiment of the present disclosure;
FIG. 8 is a schematic structural view of a rear cover assembly according to an embodiment of the present disclosure; and
FIGs. 9 to 11 are schematic process operations of a method for manufacturing a rear cover assembly according to an embodiment of the present disclosure.

**List of reference numerals**

| | |
|---|---|
| 10: rear cover assembly | 100: rear cover body |
| 200: antenna layer | 300: cover film layer |
| 400: connection member | 500: spray coating layer |
| 600: injection molded layer | 700: shower coating layer |
| 800: base film | 20: device body |
| 21: display screen | 22: middle frame |
| 30: main board | 31: conductive flat spring. |

### DETAIL DESCRIPTION OF EMBODIMENTS

Hereinafter, specific implementations of the present disclosure will be described with respect to the accompanying drawings. It will be appreciated that the specific implementations as set forth herein are merely for the purpose of illustration and explanation of the present disclosure and should not be constructed as a limitation thereof. It will be appreciated that any combination of the embodiments or features thereof is possible without conflict.

Types and application scenarios of the terminal device are not specifically limited in the embodiments of the present disclosure. For example, the terminal device may be a mobile phone, a tablet computer, a data card, a wristwatch, a wearable device, an in-vehicle device, or the like.

The existing mainstream types of antenna for terminal devices include FPC antenna, LDS antenna and PDS antenna.

The flexible circuit board (FPC) antenna is attached to a surface of an inner bracket inside a rear cover (battery cover) of the terminal device by means of adhesion. However, since the inner bracket should be matched with the modeling appearance, the FPC antenna cannot be adhered to an arc-shaped curved surface of the inner bracket firmly and thus is prone to warping, and due to low precision of the adhering process, antennas in different terminal devices are poor in consistency of indexes.

The laser-direct-structuring (LDS) process antenna is manufactured on a corresponding structure of the terminal device through laser etching and chemical plating. The LDS process antenna has a relatively flexible structure, and relatively strong adhesion to the arc-shaped curved surface. However, the LDS process antenna can only be manufactured on an outer surface of the bracket or an inner surface of the rear cover, resulting in a relatively low space utilization. Moreover, the manufacturing process thereof involves chemical plating, which is not environmentally friendly. In addition, this process is critical to plastic particles, so the available types of plastic particles are limited, the material is brittle, and the resulted rear cover has a low strength.

Both of the above two antenna techniques can be merely implemented on the inner surface of the rear cover or on the bracket, resulting in a limited effective space of the antenna. The PBINTI NG direct structure (PDS) antenna is an antenna manufacturing technology that transfers a metal antenna layer to a surface of a case through a printing process. Although the PDS antenna has a higher space utilization than the former two antenna technologies, the printing technique of the PDS antenna has very strict requirements on the structural design, leading to excessive high design and production costs.

### Embodiment I

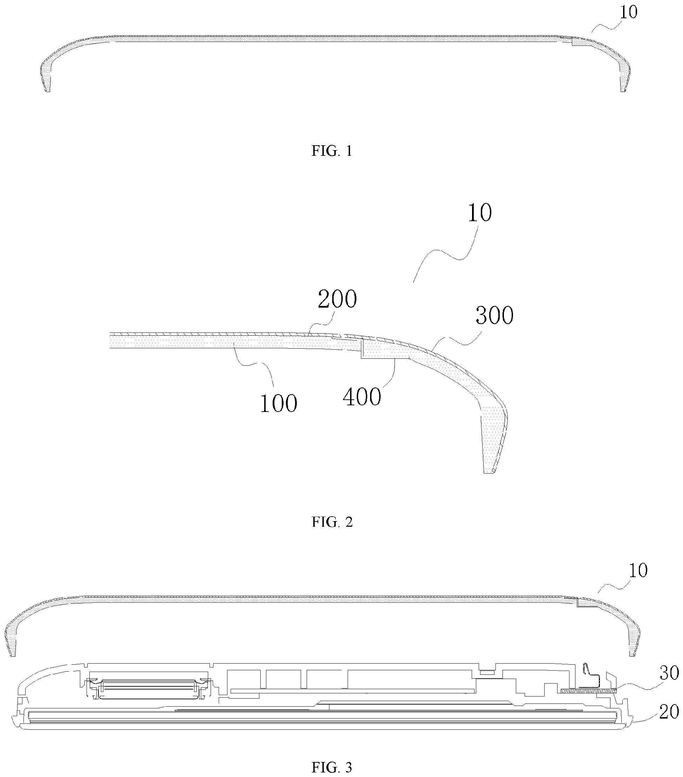

To solve the above technical problem, a terminal device structure which is simple in structure, easy to manufacture and capable of improving antenna performance is provided. Embodiment I of the present disclosure provides a rear cover assembly 10 applied to a terminal device. As shown in FIGs. 1 and 2, The rear cover assembly 10 includes a rear cover body 100, an antenna layer 200 and a cover film layer 300 sequentially disposed from inside to outside in a thickness direction of the rear cover assembly 10, and the rear cover assembly 10 further includes a conductive connection member 400 having a first end electrically connected to the antenna layer 200, and a second end passing through the rear cover body 100 and located in a space defined by the rear cover body 100. Herein, a portion (the left portion in FIG. 2) of the connection member 400 adjacent to the first end is embedded into the rear cover body 100, while another portion (the right portion in FIG. 2) of the connection member 400 adjacent to the second end is exposed from the rear cover body 100 to be electrically connected to a main board of the terminal device (which will be described in detail below).

It should be noted that the rear cover assembly 10 is configured to be fixedly connected to the device body of the terminal device to cover a back surface of the device body. The whole rear cover body (and the rear cover assembly) may have a U shape or an arch shape. An inner side of the rear cover body 100 refers to a side of the rear cover body 100 that faces the device body 20 (see FIG. 3) of the terminal device when the rear cover body 100 is fixedly connected to the device body 20. The space defined by the rear cover body 100 refers to an (open) space defined by the rear cover body 100 on the inner side thereof (that is, the space is located on the inner side of the rear cover body 100). The cover film layer 300 is located on a side surface of the rear cover body 100 away from the defined space (that is, the cover film layer 300 is located on an outer side of the rear cover body 100), and a color pattern or logo of the terminal device may be formed on the cover film layer 300 to determine an appearance of the rear cover of the terminal device.

In this embodiment, by combining the antenna preparation scheme and the battery cover film coating technique, the antenna layer 200 is disposed between the rear cover body 100 and the cover film layer 300 to form the antenna, and the antenna is conducted with an interior of the terminal device through the connection member 400 that passes through the rear cover body 100. Therefore, the antenna can be displaced from the limited space inside the terminal device to a position closest to the outer surface of the rear cover of the terminal device (except the cover film layer) without influencing a visual effect of the cover film layer 300. Thereby, the space for provision of the antenna, and thus the antenna performance, is greatly increased, the antenna design is no longer limited by the structural design, and the design bottleneck of terminal devices in terms of the antenna in the existing art is broken through.

The material of the cover film layer 300 is not particularly limited in this embodiment. For example, the cover film layer 300 may include an ultraviolet curable transfer texture layer (UV transfer texture layer) which may be formed by curing an ultraviolet curable transfer adhesive (also referred to as UV transfer adhesive).

The material of the rear cover body 100 is not particularly limited in this embodiment. In some implementations, the rear cover body 100 includes a plastic material (e.g., plastic cement) and is formed by injection molding, and the connection member 400 is embedded into the rear cover body 100 during the process of forming the rear cover body 100 by injection molding. The material of the connection member 400 is not particularly limited in this embodiment. For example, the connection member 400 includes or is made of a metal material.

In this embodiment, the antenna layer 200 is a metal layer plated on an inner side of the cover film layer 300. When the cover film layer 300 is completely displaced, the antenna layer 200 is plated on a surface of the cover film layer 300. Then, the rear cover body 100 is injected through an in-mold injection molding process, so that the connection member 400, the rear cover body 100, the antenna layer 200, and the cover film layer 300 are integrally injection molded.

The antenna layer 200 is pressed against the cover film layer 300 under a filling effect of the injected rear cover body 100 material, so that the antenna layer 200 is held at a position closest to the outer surface in the rear cover of the terminal device, the antenna in the antenna layer 200 can be tightly attached to the cover film layer 300 and has a shape conforming to the inner surface of the cover film layer 300. Therefore, the antenna will not be affected by the modeling curved surface or structural design, and the defects in the existing art, such as edge warping and the like, can be avoided, so that the performance of the antenna is further improved, and the application range of the antenna is expanded.

In order to improve a signal transceiving capacity of the antenna, in some implementations the antenna layer 200 includes a plurality of antenna patterns, to which the first ends of a plurality of connection members 400 are electrically connected in one-to-one correspondence.

In this embodiment, the antenna layer 200 includes a plurality of antenna patterns, and the plurality of connection members 400 form a plurality of feeding points on the inner surface of the rear cover body 100 to connect each antenna pattern with a corresponding communication circuit. Therefore, a plurality of antennas are formed to respectively implement signal transmitting and receiving tasks in multiple frequency bands, thereby improving the signal transceiving capacity of the antenna.

How to manufacture the cover film layer 300 is not particularly limited in this embodiment. For example, the rear cover assembly 10 may be manufactured through an inner molding translate label (IMT) technique or an IBF technique. The cover film layer 300 may include an ultraviolet curable transfer texture layer (UV transfer texture layer), an optical plating layer (coated layer) and a base color layer (printing ink layer) sequentially stacked from outside to inside, and the antenna layer 200 is formed on the base color layer.

How characters or other patterns are formed on the surface of the cover film layer 300 is not particularly limited in this embodiment. In some implementations, the cover film layer 300 may further include a logo layer (printed character layer) or gradient layer configured to form a logo or color pattern on the surface of the cover film layer 300.

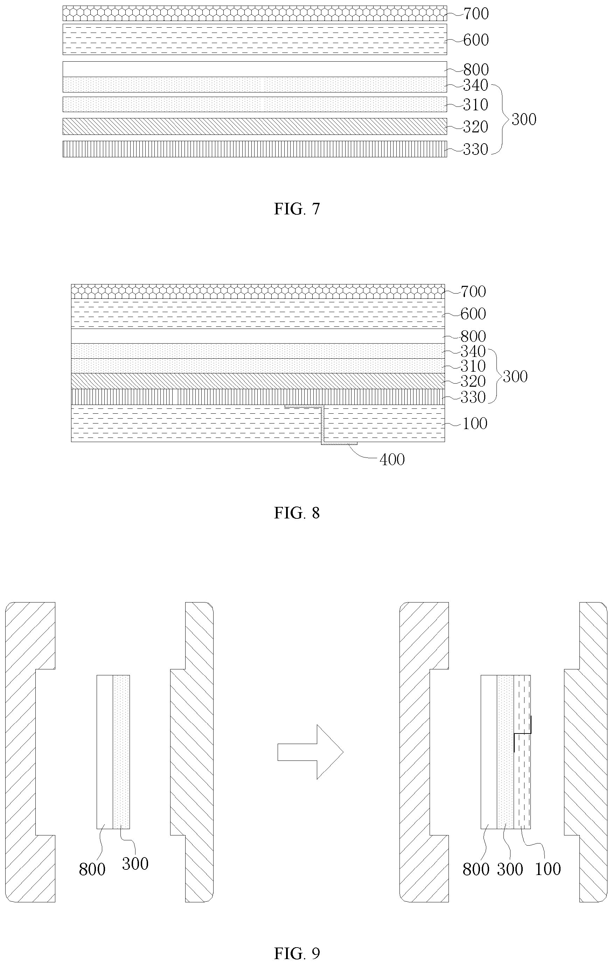

FIG. 7 shows an example of the cover film layer 300 produced by the IBF technique. The cover film layer 300 includes a UV transfer texture layer 310, a plating layer 320, and a base color layer 330. A logo layer (printed character layer) 340 may be further formed on a side of the cover film layer 300 facing away from the rear cover body 100.

As shown in FIG. 7, in the case of manufacturing the rear cover assembly by the IBF technique, the rear cover assembly may further include a base film 800, an injection molded layer 600, and a shower coating layer 700. The base film 800 is located on a side of the cover film layer 300 away from the rear cover body 100, the injection molded layer 600 and the shower coating layer 700 are sequentially formed on a side of the base film 800 away from the cover film layer 300, and the shower coating layer 700 is formed by shower coating a UV-curing liquid. In this example, the base film 800 is used as a substrate for manufacturing the cover film layer 300, and the injection molded layer 600 and the shower coating layer 700 on the surface of the injection molded layer 600 can realize a glass-like effect on the entire rear cover surface, thereby improving the aesthetic property of the terminal device.

### Embodiment II

Embodiment II of the present disclosure provides a terminal device. As shown in FIGs. 3 to 6, the terminal device includes a device body 20 and a rear cover assembly 10 being the rear cover assembly 10 according to embodiment I. The device body 20 includes a main board 30, the rear cover body 100 is fixedly connected to the device body 20, the main board 30 is located in a space defined by the rear cover body 100, and a second end of a connection member 400 is electrically connected to the main board 30.

In this embodiment, by combining the antenna preparation scheme and the battery cover film coating technique, the antenna layer 200 is disposed between the rear cover body 100 and the cover film layer 300 to form the antenna, and the antenna is conducted with an interior of the terminal device through the connection member 400 penetrating the rear cover body 100. Therefore, the antenna can be displaced from the limited space inside the terminal device to a position closest to the outer surface in the rear cover of the terminal device without influencing a visual effect of the cover film layer 300. Thereby, the space for provision of the antenna, and thus the antenna performance in the terminal device, are greatly increased, the antenna design is no longer limited by the structural design, and the design bottleneck of terminal devices in terms of the antenna in the existing art is broken through.

How the connection member 400 of the rear cover assembly 10 is electrically connected to the main board 30 is not particularly limited in the embodiment. For example, in some implementations, as shown in FIGs. 3 to 6, the terminal device further includes a conductive flat spring (elastic piece) 31 on the main board 30, via which the second end of the connection member 400 is electrically connected to the main board 30.

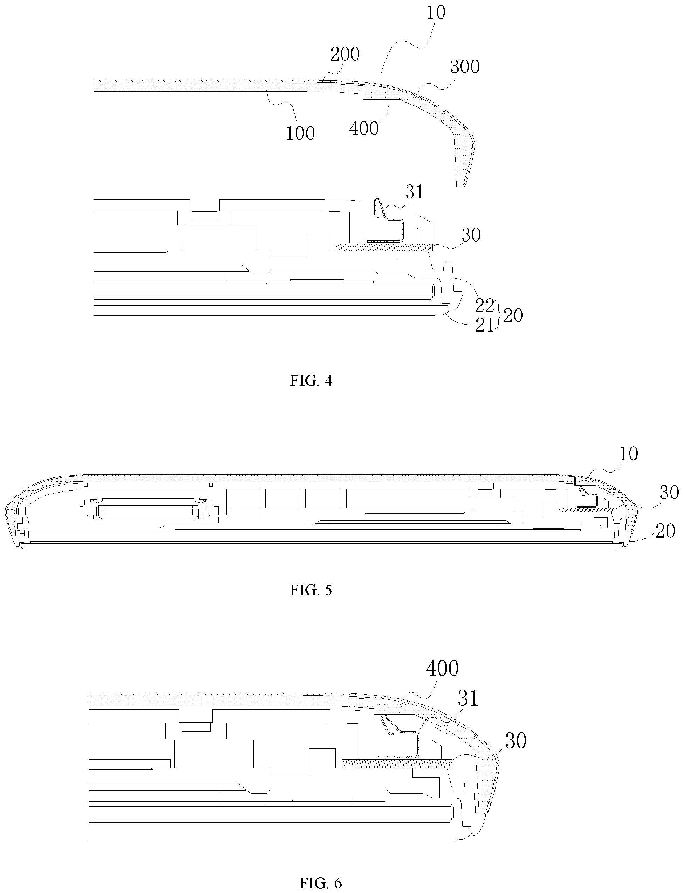

When the rear cover assembly 10 is fixedly connected to the device body 20, the rear cover assembly 10 and the device body 20 are firstly aligned such that positions of one or more connection members 400 on the rear cover assembly 10 are aligned with positions of one or more conductive flat springs 31 on the device body 20 respectively (as shown in FIGs. 3 and 4). Then, the rear cover assembly 10 and the device body 20 get closer and bonded to each other, and the conductive flat springs 31 are pressed against second ends of the connection members 400 under an action of elastic force, so that the antenna patterns in the antenna layer 200 are electrically connected to the main board 30 (as shown in FIGs. 5 and 6).

### Embodiment III

Embodiment III of the present disclosure provides a method for manufacturing a rear cover assembly, including:
forming a cover film layer 300;
forming an antenna layer 200 on one side of the cover film layer 300; and
forming a combined structure of a rear cover body 100 and a connection member 400 on a side of the antenna layer 200 facing away from the cover film layer 300. The rear cover body 100 is attached to the antenna layer 200, and the rear cover body 100 is provided with a connection member 400 having a first end electrically connected to the antenna layer 200, and a second end passing through the rear cover body 100.

In the rear cover assembly 10 manufactured with the method according to this embodiment, the antenna layer 200 is disposed between the rear cover body 100 and the cover film layer 300, and the antenna is conducted with an interior of the terminal device through the connection member 400 that passes through the rear cover body 100. Therefore, the antenna can be displaced from the limited space inside the terminal device to a position closest to the outer surface in the rear cover of the terminal device without influencing a visual effect of the cover film layer 300. Thereby, the space for provision of the antenna, and thus the antenna performance in the terminal device, are greatly increased, the antenna design is no longer limited by the structural design, and the design bottleneck of terminal devices in terms of the antenna in the existing art is broken through.

The material of the antenna layer 200 is not particularly limited in this embodiment. For example, the antenna layer 200 may include a metal material. Forming the antenna layer on one side of the cover film layer may include: plating a metal layer including at least one antenna pattern on one side of the cover film layer.

How to form the antenna pattern is not particularly limited in this embodiment. For example, a plating pattern may be firstly formed at a position where the antenna pattern is to be formed, and then a metal material is plated on the plating pattern to obtain the antenna pattern. Alternatively, a metal layer may be formed on the entire surface of the cover film layer, and then the metal layer is patterned to obtain the antenna pattern. Alternatively, an insulating ink layer may be firstly formed in a non-antenna pattern region, and then a metal material may be sputtered on the entire surface of the cover film layer to obtain the antenna pattern in a region without the insulating ink, and finally, the insulating ink without the metal pattern may be removed by means of tape bonding or the like.

In this embodiment, the rear cover body 100 and the connection member 400 are integrally formed through a one-time injection molding process. Specifically, forming the combined structure of the rear cover body 100 and the connection member 400 may include:
placing the cover film layer 300 on which the antenna layer 200 is formed into an injection mold;
placing a connection member 400 on a side of the antenna layer 200 facing away from the cover film layer 300, where a first end of the connection member 400 is in contact with the antenna layer 200;
injecting molten plastic into the injection mold to cover the antenna layer; and
cooling the plastic to obtain the rear cover body 100.

In some implementations, the method for manufacturing the rear cover assembly of this embodiment may be implemented through an inner molding translate label (IMT) technique or an IBF technique.

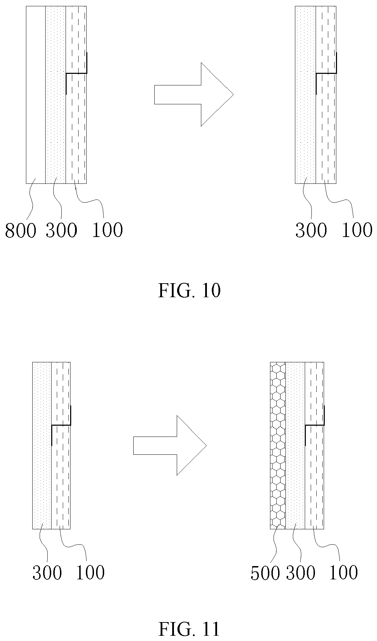

In an implementation where the rear cover assembly is manufacture by the IMT technique, forming the cover film layer 300 includes: providing a base film 800; and forming the cover film layer 300 on the base film 800. The method further includes, after forming the rear cover body 100: removing the base film 800 on the cover film layer 300 (as shown in FIG. 10).

When the rear cover assembly is manufactured by the IMT technology, the base film 800 merely serves to attach the cover film layer 300, and is peeled off after the antenna layer 200 is formed on the cover film layer 300 and the rear cover body 100 is formed by injection molding. Therefore, the overall thickness of a finished rear cover assembly is effectively reduced, and a lightweight terminal device such as a mobile phone is obtained.

The structure of the cover film layer 300 is not particularly limited in this embodiment. For example, forming the cover film layer 300 may include sequentially forming an ultraviolet curable transfer texture layer (UV transfer texture layer), an optical plating layer (such as an OPVD plating layer) and a base color layer (printing ink layer) on the base film 800. The antenna layer 200 is formed on the base color layer.

How characters or other patterns are formed on the surface of the cover film layer 300 is not particularly limited in this embodiment. For example, the cover film layer 300 may further include a logo layer (printed character layer) or gradient layer.

To facilitate understanding of those skilled in the art, the embodiment further provides a specific implementation of manufacturing the rear cover assembly by the IMT technique, including:
providing a base film 800;
manufacturing a release layer on the base film 800 (so that the base film 800 can be peeled off after the injection molding of the rear cover body 100);
manufacturing a cover film layer 300 on the release layer, including: sequentially manufacturing a logo layer, a UV transfer texture layer, an OPVD plating layer, a printing ink layer covering the bottom, and a process layer (such as a wash-primer layer) on the release layer;
plating an antenna layer 200 on a side of the cover film layer 300 away from the base film 800;
performing a hot pressing/trimming process on the current composite film layer to obtain a composite film layer sheet with a predetermined shape as shown on the left side of FIG. 9;
placing the composite film layer sheet into a mold, as shown in FIG. 9, providing a connection member 400 on a side of the antenna layer 200 facing away from the cover film layer 300, injecting molten plastic into the mold, and performing cooling to obtain a combined structure of the rear cover body 100 and the connection member 400;
peeling off the base film 800 from a surface of the cover film layer 300 by means of grinding or direct stripping, as shown in FIG. 10;
spraying the cover film layer 300 on a side away from the rear cover body 100 to obtain a spray coating layer 500, as shown in FIG. 11; and
cutting an edge of the composite film layer with a computer numerical control machine (CNC) to obtain a finished rear cover.

When the rear cover assembly is manufactured by the IBF technology, forming the cover film layer 300 includes:
providing a base film 800; and
forming a cover film layer 300 on the base film 800.

The manufacturing method further includes forming a transparent injection molded layer 600 on a side of the base film 800 away from the cover film layer 300; and
forming a shower coating layer 700 on the injection molded layer 600 by shower coating a UV-curing liquid.

The structure of the cover film layer 300 is not particularly limited in this embodiment. For example, forming the cover film layer 300 may include sequentially forming a logo layer 340, a UV transfer texture layer 310, a plating layer 320 and a base color layer 330 on the base film 800. FIG. 7 schematically shows a relative position of each sub-film layer in the cover film layer 300.

In the rear cover assembly manufactured by the IBF technology in this embodiment, the injection molded layer 600 and the shower coating layer 700 on the surface thereof can realize a glass-like effect on the entire rear cover surface, thereby improving the aesthetic property of the terminal device.

To facilitate understanding of those skilled in the art, the embodiment further provides a specific implementation of manufacturing the rear cover assembly by the IBF technique, including:
providing a base film 800;
forming a cover film layer 300 on the base film 800, including:
   sequentially forming a logo layer 340, a UV transfer texture layer 310, a plating layer 320 and a base color layer 330 on the base film 800;
   forming an antenna layer 200 on the base color layer 330;
   placing the current composite film layer into a mold, placing a connection member 400 on a side of the antenna layer 200 facing away from the cover film layer 300, making a first end of the connection member 400 in contact with the antenna layer 200, dropping/feeding and injection molding a rear cover body 100;
   forming a transparent injection molded layer 600 on a surface of the base film 800, and shower coating a UV-curing liquid on a surface of the transparent injection molded layer 600 to obtain a shower coating layer 700;
   cutting an edge of the composite film layer with a computer numerical control machine (CNC) to obtain a finished rear cover; and
   performing quality detection on the finished rear cover.

### Embodiment IV

Embodiment IV of the present disclosure provides a method for manufacturing a terminal device that includes a device body 20, a main board 30, and a rear cover assembly 10. The method includes:
manufacturing the rear cover assembly 10 with the method for manufacturing the rear cover assembly described in the previous embodiments; and
fixedly connecting the rear cover assembly 10 to the device body 20, and electrically connecting the main board 30 and a connection member 400 of the rear cover assembly 10.

In an implementation, fixedly connecting the rear cover assembly 10 to the device body 20 may include:
aligning the rear cover assembly 10 and the device body 20 such that positions of one or more connection members 400 on the rear cover assembly 10 are aligned with positions of one or more conductive flat springs 31 on the device body 20 respectively (as shown in FIGs. 3 and 4);
making the rear cover assembly 10 and the device body 20 get closer and connected to each other, as shown in FIGs. 5 and 6, so that the conductive flat springs 31 are pressed against second ends of the connection members 400 under an action of elastic force, and the antenna patterns in the antenna layer 200 are electrically connected to the main board 30.

It will be appreciated that the above embodiments/implementations are merely exemplary embodiments/implementations for the purpose of illustrating the principle of the present disclosure, and the present disclosure is not limited thereto. It will be apparent to one of ordinary skill in the art that various modifications and variations may be made without departing from the spirit or essence of the present disclosure. Such modifications and variations should also be considered as falling into the protection scope of the present disclosure.

## Claims

1. A rear cover assembly applied to a terminal device, wherein
the rear cover assembly comprises a rear cover body, an antenna layer and a cover film layer sequentially disposed from inside to outside in a thickness direction of the rear cover assembly, and
the rear cover assembly further comprises a conductive connection member having a first end electrically connected to the antenna layer, and a second end passing through the rear cover body and located in a space defined by the rear cover body.

2. The rear cover assembly according to claim 1, wherein the antenna layer is a metal layer plated on an inner side of the cover film layer.

3. The rear cover assembly according to claim 1 or 2, wherein the rear cover body is formed by injection molding, during which the connection member is embedded into the rear cover body.

4. The rear cover assembly according to any one of claims 1 to 3, wherein the antenna layer comprises a plurality of antenna patterns, to which first ends of a plurality of connection members are electrically connected in one-to-one correspondence.

5. The rear cover assembly according to any one of claims 1 to 4, wherein the cover film layer comprises an ultraviolet curable transfer texture layer, an optical plating layer and a base color layer sequentially stacked from outside to inside, and the antenna layer is formed on the base color layer.

6. The rear cover assembly according to any one of claims 1 to 5, wherein the rear cover assembly further comprises a base film, an injection molded layer and a shower coating layer, the base film is located on a side of the cover film layer away from the rear cover body, and the injection molded layer and the shower coating layer are sequentially formed on a side of the base film away from the cover film layer.

7. The rear cover assembly according to any one of claims 1 to 6, wherein
the rear cover assembly is configured to be fixedly connected to a device body of the terminal device with an inner side thereof facing the device body; and
a portion of the connection member adjacent to the first end is embedded into the rear cover body, while a portion of the connection member adjacent to the second end is exposed from the rear cover body.

8. A terminal device, wherein the terminal device comprises a device body and the rear cover assembly according to any one of claims 1 to 6, wherein the device body comprises a main board, the rear cover body is fixedly connected to the device body, the main board is located in a space defined by the rear cover body, and the second end of the connection member is electrically connected to the main board.

9. The terminal device according to claim 8, wherein the terminal device further comprises a conductive flat spring on the main board, via which the second end of the connection member is electrically connected to the main board.

10. A method for manufacturing a rear cover assembly, comprising:
forming a cover film layer;
forming an antenna layer on one side of the cover film layer; and
forming a combined structure of a rear cover body and a connection member on a side of the antenna layer facing away from the cover film layer, wherein the rear cover body is attached to the antenna layer and is provided with a connection member, the connection member having a first end electrically connected to the antenna layer, and a second end passing through the rear cover body.

11. The method according to claim 10, wherein forming the antenna layer on one side of the cover film layer comprises:
plating a metal layer comprising at least one antenna pattern on one side of the cover film layer.

12. The method according to claim 10 or 11, wherein forming the combined structure of the rear cover body and the connection member comprises:
placing the cover film layer on which the antenna layer is formed into an injection mold;
placing the connection member on a side of the antenna layer facing away from the cover film layer, wherein a first end of the connection member is in contact with the antenna layer;
injecting molten plastic into the injection mold to cover the antenna layer; and
cooling the plastic to obtain the rear cover body.

13. The method according to claim 10, wherein forming the cover film layer comprises:
sequentially forming an ultraviolet curable transfer texture layer, an optical plating layer and a base color layer; and
wherein the antenna layer is formed on the base color layer.

14. The method according to any one of claims 10 to 13, wherein forming the cover film layer comprises:
providing a base film; and
forming the cover film layer on the base film; and
the method further comprises, after forming the rear cover body: removing the base film on the cover film layer.

15. The method according to any one of claims 10 to 13, wherein forming the cover film layer comprises:
providing a base film; and
forming the cover film layer on the base film; and
the method further comprises, after forming the rear cover body:
forming an injection molded layer on a side of the base film away from the rear cover body; and
forming a shower coating layer on the injection molded layer by shower coating a UV-curing liquid.
